# EUROPEAN PATENT APPLICATION

(11) **EP 1 598 883 A1**
(43) Date of publication of application: **23.11.2005**
(21) Application number: 05104099.6
(22) Date of filing: 17.05.2005
(51) Int. Cl.: H01M 2/12

(54) **Improved vent-cap for electric battery**

(30) Priority: 20.05.2004 IT MI20040238 U
(71) Applicant: TABA S.r.l., 26025 PANDINO (Cremona) (IT)
(72) Inventor: Sampellegrini, Angelo, 26025, Pandino (Cremona) (IT)
(74) Representative: Faggioni, Giovanmaria

(57) **Abstract**

Cap for the exhaust holes of electrolytic electric batteries, which comprises a chamber, limited by a substantially cylindrical body (1), closed below by a lower bottom wall (2) and closed above by a lid-like wall (3), which walls are substantially planar, and within which body there is housed a decanting labyrinth (4), and which cap further has, in the thickness of said bottom wall (2), a transversal pipe (12), ending in at least one lateral exhaust opening (11a, 11b) which leads to the outside of the cap and which is connected with the chamber of the decanting labyrinth (4) by a substantially axial hole (13).

## Description

The present invention relates to a cap for an electric battery, in particular to an improved cap for closing the vents of the battery top wall.

It is known that closing caps for sulphuric-acid electric batteries employed on motorvehicles have gas outlet holes on their top and bottom surfaces. It has been evidenced that such an arrangement easily exposes the caps to the corrosive action of the sulphuric acid present in solution in the battery liquid.

As can be easily understood, this type of problem occurs especially when the battery experiences strong jolts: sometimes, for example when the vehicle is driven on rough terrain, ascending vibratory movements are generated which cause the battery liquid to splash, said splashes not only coming into contact with the bottom surface of the closing cap, but penetrating inside the cap, while outlet holes or leaks, even small ones, are found on the bottom surface of the cap itself, as already mentioned before. The droplets of acid then penetrate along the gas outlet path, carried by the gas itself, causing significant damage to the microporous flame trap pad normally fixed to the cap top wall.

It is the object of the present invention to propose a cap, to be fitted in the suitable battery top holes, the structure of which is capable of preventing droplets of acid from seeping into the cap lower wall and which cap does thereby not allow the outflow of acid beyond its top wall, or contact with the flame trap pad.

The above object is achieved through a cap manufactured according to the feature mentioned in claim 1).

Further features and advantages of the cap structure according to the present invention will in any case be clearer from the following detailed description of a preferred embodiment, given purely as a non-limiting example and illustrated in the accompanying drawings, wherein:

fig. 1 shows a threaded cap according to the invention, in a front view of the right-hand half and in a cross-section view of the other half rotated by 90° to the first one, respectively; and

fig. 2 shows, equally in a cross-section view, a different embodiment of a pressure cap according to the invention.

The cap according to the invention consists of a substantially cylindrical body 1, the outer wall of which is equipped with a threading, known per se, for engagement into a battery top hole, provided with an inner threading. Body 1 is closed by a lower end wall 2, and by an upper lid-like wall 3, which walls are substantially planar.

Body 1 houses a decanting labyrinth 4, already known per se in the art, consisting of a plurality of mutually adjacent disc shelves one on top of the other; in a known manner, each shelf has at least one gas flow hole, and the holes of the various shelves never coincide axially, so as to force exhaust gases to follow a labyrinth path.

Top wall 3 is crossed by a series of tiny holes 5 scattered along the periphery and communicating with a chamber 6 wherein a microporous plastic flame trap pad 7 is housed, according to a technique known per se. A hole 8 provides communication between labyrinth 4 and chamber 6 and thereby facilitates gas outflow. A small cover 9 and an annular seal 10, the latter being arranged between said small cover 9 and body 1, guarantee closing seal.

Flame trap pad 7 is arranged within chamber 6 so as to be welded to small cover 9 and to labyrinth 4. The distance between the pad and the walls defining chamber 6 is minimal; thereby, fire cannot find sufficient gas to burn the pad, thereby avoiding any risk of explosion.

According to the fundamental feature of the present invention, lower wall 2 is completely closed on the side facing the inside of the battery, and yet two side openings 11a, 11b are formed to make up a pipe 12 passing through the thickness of wall 2; this pipe 12 further communicates with the inner compartment of body 1 through a central hole 13. Preferably, pipe 12 provides, as a further safeguard, a bottleneck step 14. By this arrangement, the liquid that may enter the side openings 11a, 11b as a consequence of combined vibratory movements, both ascending and transversal ones, is caused to stop, or to dramatically reduce its speed, against the wall of bottleneck step 14 and can consequently flow backwards without licking in any way hole 13 communicating with labyrinth 4.

Therefore, the gas normally developing from the sulphuric acid solution as an effect of the electrolytic reaction flows through side openings 11a, 11b; as already mentioned previously, from pipe 12 the gas flows through hole 13 into labyrinth 4 and then outwards, through flame trap pad 7 and further holes 5, in a manner known per se.

Through empirical trials it was possible to ascertain that this arrangement of the paths of the exhaust gases released by the battery cell prevents, in a surprisingly comprehensive and safe way, any leak of droplets of acid towards the flame trap pad. In particular, tests carried out on batteries resting on a vibrating or up-and-over bench have evidenced that no acid leaks from the cap and that the gas found along the exhaust path is not enough for blasts to occur.

An embodiment such as the one described above allows remarkable savings in cap manufacturing costs, since a single ultrasonic welding operation is performed along multiple welding lines 15, for all components. This allows to lower the battery selling price and to achieve improved battery performance and improved battery life at the same time.

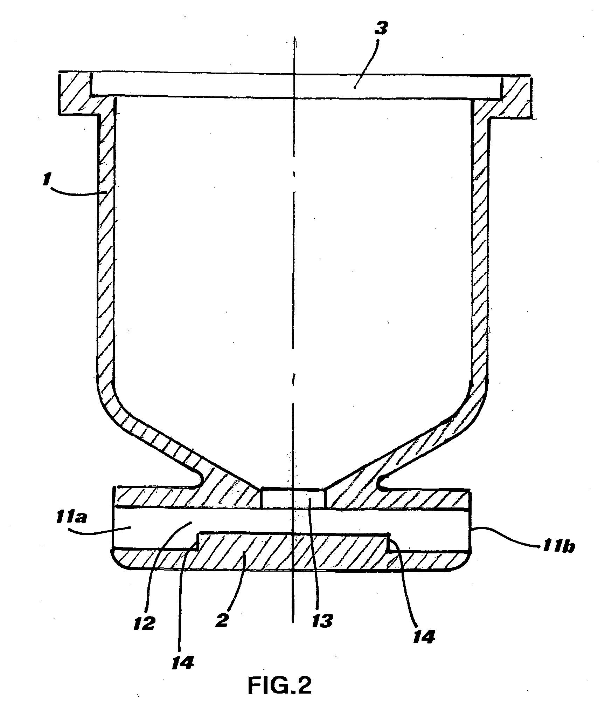

The arrangement according to fig. 2 shows that the invention can be applied also to different cap versions and, more precisely, to caps having a bayonet joint or to caps having a push joint.

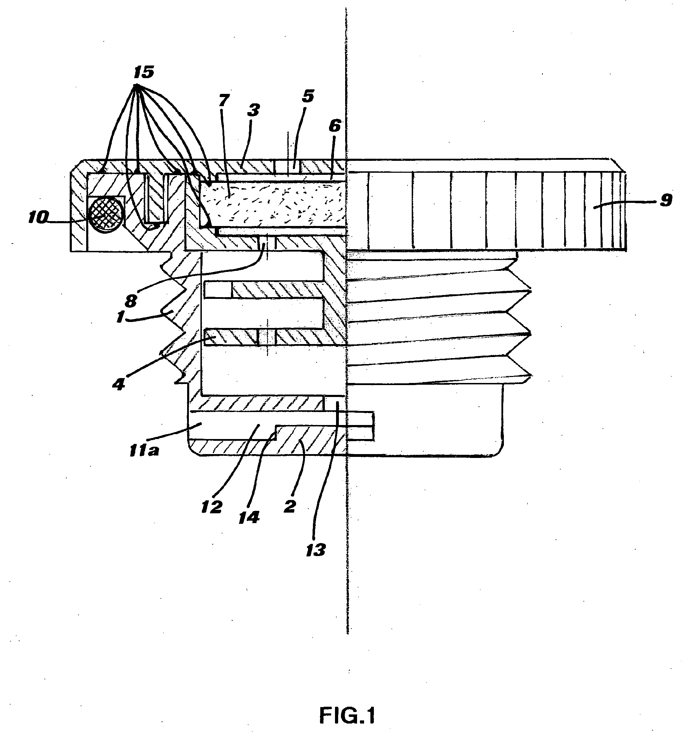

A cap of this type is partially and diagrammatically illustrated in fig. 2, where the same numbering of fig. 1 has been used, body 1 again acting as a container of a labyrinth structure (no longer shown); at the bottom of body 1 there is formed a wall 2 crossed by a through-pipe 12, ending with end side openings 11a, 11b. In pipe 12 a step 14 is equally formed opposite hole 13 which communicates with the inside of body 1.

Furthermore, it is understood that protection of the above-described invention is not to be considered limited to the specific embodiment shown, but extends to any other technically equivalent construction variant, as defined by the following claims.

## Claims

1. A cap for the exhaust holes of electrolytic electric batteries, of the type comprising a chamber, limited by a substantially cylindrical body (1), closed at the bottom by a bottom wall (2), and closed at the top by a lid-like wall (3), which walls are substantially planar, inside said body 1 being housed a decanting labyrinth (4), **characterised in that**, associated with said bottom wall (2) there is formed a transversal pipe (12), ending with at least one lateral exhaust opening (11a, 11b), which leads to the outside of the cap, and connected with the chamber of the decanting labyrinth (4) by a substantially axial hole (13).

2. The cap as in claim 1), **characterised in that** said pipe (12) provides a bottleneck step (14) at least in the proximity of the hole (13).

3. The cap as in claim 1) or 2), **characterised in that** in said upper wall (3) a chamber (6) for the housing of a flame trap pad (7) is provided, said chamber (6) having a series of exhaust holes (5) exposed to the air and a hole (8) communicating with the labyrinth (4).

4. The cap as in any one of claims 1) to 3), **characterised in that** in said upper wall (3) a chamber (6) for housing a flame trap pad (7) is provided, and **in that** the distance between the upper and lower walls of chamber (6) and the faces of said pad (7) is minimal.

5. The cap as in any one of the previous claims, **characterised in that** the closing seal is guaranteed by a small cover (9) and by a an annular seal (10) arranged between said small cover (9) and the body (1).

6. The cap as in claim 5), **characterised in that** all the components it consists of are welded through a single ultrasonic welding in correspondence of multiple welding lines (15).
